# EUROPEAN PATENT APPLICATION

(11) **EP 2 975 873 A1**
(43) Date of publication of application: **20.01.2016**
(21) Application number: 14382280.7
(22) Date of filing: 17.07.2014
(51) Int. Cl.: H04W 12/02, H04L 29/06, G06F 21/57

(54) **A computer implemented method for classifying mobile applications and computer programs thereof**

(71) Applicant: Telefonica Digital España, S.L.U., 28013 Madrid (ES)
(72) Inventor: de los Santos Vílchez, Sergio, 28013 Madrid (ES); Guzmán Sacristán, Antonio, 28013 Madrid (ES); Barroso Berrueta, David, 28013 Madrid (ES); Alonso Cebrián, José María, 28013 Madrid (ES)
(74) Representative: Carlos Hernando, Borja

(57) **Abstract**

A computer implemented method for classifying mobile applications and computer programs thereof.

The method establishes a similarity degree between an application (A) to be classified and one or more classified applications (B) before said application (A) been installed, or broadcasted, in a computing device, the one or more classified applications (B) being already analyzed and stored in a storage unit (400) of a server (150); analyzing, an analyzer unit (500), the application (A) for obtaining features thereof by evaluating: information related to the use made of the digital certificate with which the application (A) has been signed, information of the software package containing the application (A) and/or information related to the publication of the application (A); and as a result of a features comparison of the application (A) with the one or more classified applications (B) classifying the application (A) depending on how much similar it is with the one or more classified applications (B), said classification comprising obtaining a risk assessment of the application (A).

## Description

### Field of the invention

The present invention generally relates to mobile applications. In particular, the invention relates to a computer implemented method for classifying mobile applications and computer programs thereof. Moreover, in the invention, given an application, the likelihood of being an application hiding malware is determined without having made a previous offline analysis of the same and without significant computational costs.

### Background of the invention

The massive spread of mobile computing platforms, in conjunction with other technological and social aspects, have led a revolution for the so-called information society. The loss of tight bindings derived from the use of these mobile devices has enabled that millions of users can access to their digital services and applications without the constraints associated with computing paradigms defined at the end of the last century.

The incentive of change in the way these services are consumed by users has been the Cloud Computing. In the case of mobile applications, this role of driving force has been played by the application markets, which have allowed developers to bring these applications closer to the users and simplify the way users could purchase and install them on their devices. However, contrary to what has happened to the Cloud technology, for mobile applications still exists a strong dependence with the execution platform that imposes limitations to the flexibility of the developers.

There are so many application markets types as operating systems (OS) are proposed to simplify user access to hardware. For example, Apple Store®, Firefox Marketplace®, Blackberry World® and Google Play® are the main markets of applications for mobile devices operating systems IOS^{®}, FirefoxOS^{®}, RIM BlackBerry^{®} and Android^{®} respectively. Unfortunately, this expansion of the software industry to cover the inherent characteristics of these mobile platforms, has failed to put aside some of the problems that had not been fixed when applications were developed to run on laptops and workstations. Among all these problems, the problems of malware stand out. These have caused reputational damages, economic fraud and can be used by cybercriminals. The efforts of those responsible for the various markets to stem the progress of the malware and prevent their explosion have been very different.

A prominent example of that fact is the way Google^{®} has been managing the Android Google Play. Android^{®} is the world's most widely used mobile operating system and continues to be a primary target for malware attacks due to its market share, its open source architecture, the heterogeneity of the platforms it supports and the coexistence of multiple operating system versions.

The evolution constant of malware that is developed to be run in mobile devices makes it difficult to directly inherit the classic definitions of malware. In fact, this adaptation to mobile platforms has allowed extending the categories of what is understood as malware. For example, there are some applications that do not follow a pattern of hiding; instead they openly inform the user that all activity will be traced. In this particular scenario, where malware can get to be spread from official markets, it can be concluded that the objectives pursued by malware developers are:
- To steal the mobile equipment identity (IMEI).
- To compromise any second channel based-on the usage of the mobile device in order to intercept short messages that can be used to launch phishing attacks against any online services.
- To make money calling phone premium rate numbers or sending messages to these numbers.
- To collect any information about the users and their habits, and using it build any kind of attack.

These goals become more important if any of the following special features define the application markets:
- Deficient mechanisms for review of applications before these become public.
- No limitations on the types of applications that can be published.
- API that allows a deep interaction with the kernel of the device operating system.
- Poor identification of application sources.
- Great diversity of devices and no policy requiring that application updates must meet minimum requirements.

In a greater or lesser extent, the different existing markets meet some of the features in this list. There is unanimity, however, in regard to the lack of efficient mechanisms for application review before publication. This inefficiency can manifest as high latencies defined from the moment the developers uploaded their applications to the market until such applications are accessible by consumers (e.g. Apple Store). At the opposite pole, agile processes allow to complete publication process in less than two hours, while they lose efficiency when fail in filtering out some applications that are later classified as malware. This situation seems to lead to a scenario in which you have to choose a balance between detection efficiency and the reduction in the time it takes users to published their applications. The determination of this point is determined by the performance of the chosen strategy to determine if an application contains or does not contain malware.

The great majority of the detection technologies are focused on application code analysis (static analysis) or code execution (dynamic analysis). In the worst case, the technologies try to infer anomalous behaviors to detect malicious code. Both proposals have advantages and disadvantages.

Static analysis allows making detection's signatures to distribute to software antivirus. If malware makers apply some obfuscation techniques this kind of analysis can be very complex. For solving this problem analysts use dynamic analysis (code execution) to study the behavior in a virtual environment. Dynamic analysis have a high cost (time/money) and only if it is possible to make a specific signature will be useful from the user's point of view. Currently, advanced dynamic analysis only is used in antivirus' labs, although some user's antivirus implement options of sandboxing to detect malware in a limited environment.

Currently, most anti-malware software is based on binary-code analysis or apps' execution in a controlled environment to infer malicious behavior. Regarding the growth of malware presence in markets, it seems not enough for combatting the quick creation of malware.

Other complementary approach is trying to obtain more information about the specific app without analyze or to execute code. It is possible this information will ease malware detection. Nowadays, these researches are poor. Some researchers had proposed to study the specific application package (e.g. apk).

Basically, techniques used for detecting malware can be categorized into two mainly categories: anomaly-based detection and signature-based detection (sometimes combined).

Signature-based detection technique: This technique uses the characterization of what is known to be malicious to decide the maliciousness of a program under inspection. Signature-based detection attempts to model the malicious behavior of malware and uses this model in the detection of malware. The collection of all of these models represents signature-based detection's knowledge. This model of malicious behavior is often referred to as the signature. As one may imagine this characterization or signature of the malicious behavior is the key to a successful signature-based detection method.

Anomaly-based detection techniques: This technique uses the knowledge of what constitutes normal behavior to decide the maliciousness of a program under inspection. Nowadays, samples of new malware are arriving at anti-virus vendors in an increasing rate. To avoid the collapse, it is necessary provide solutions that can limit the number of samples that would require a closer analysis, which, in most cases, requires human intervention. Several artificial intelligence techniques, particularly machine-learning techniques, have been used in the literature for automated malware analysis and classification [4]. These techniques produce some rules that can be implemented in automatic detection systems. The rules generation usually occurs in two phases: a training (learning) phase and a detection (monitoring) phase. During the training phase the detector attempts to learn the normal behavior. The best classification depends on the chosen machine learning algorithm (there are several well-known machine learning algorithms as k-Nearest Neighbors (kNN), Naïve Bayes, J48 Decision Tree, Support Vector Machine (SVM), Multilayer Perceptron Neural Network (MLP), etc.) and the chosen features to train the classification algorithm. These features can be obtained by static analysis (static features) or by dynamic analysis (dynamic features), for example, to analyze sequences of bytes, function calls, etc. It is important to remember that anomalous-based detection techniques are always focused on the behavior of the code.

In any case, a key advantage of anomaly-based detection is its ability to detect zero-day attacks. This fact produces, in return, a lost in precision. It is common to make the affirmation that these techniques accomplish malware classification instead of malware detection. For a better understanding it is important to go deeper in each specific analysis.

### Static analysis:

Static analysis is the process of analyzing the code or structure of the malware without executing it. This may involve the studying of the file's string (in general, bytes, instructions and basic blocks), format or header.

The most common features to analyze are strings and n-grams.
- Strings: a file is scanned sequentially and all plain-text data is selected. Strings are often embedded within a malware. Analyzing these strings may provide a clue on the functionality of the malware. The strings usually may include references to behavior traits such as URL, IP address, etc. To improve the effectiveness of string based signatures, malware normalization has been proposed. Static analysis was carried to eliminate unnecessary control flow as indicated by superfluous unconditional branches. Semantic nops were also removed from the malware by using decision procedures. At this point the malware was passed, now in a more canonical form, to Antivirus software. Another approach to the code normalization problem was to rewrite sequences of code using compiler optimization techniques. Expression propagation, dead code elimination, and expression simplification using algebraic identities were used. The intuition is that the process of an optimized compiler removes the redundancy of the original code and improves the terseness, resulting in a normalized representation. Exists an approach using term rewriting where rewrite rules were constructed to model the malware transformations that occur during polymorphic and metamorphic mutation. From these, a normalizing ruleset was constructed that could rewrite the malware to a canonical or near canonical representation.
- N-gram: segments of consecutive bytes from different locations within the executables of length n. In general, it is common to talk about opcode n-gram, opcode is a CPU specific operational code that performs specific machine instruction. Opcode n-gram refers to the concatenation of opcodes into segments. For example, some researchers had utilized the statistical distribution of opcodes as a predictor of malware [1].

All these features can provide a full understanding of the specific malware code. However, static analysis is a time consuming approach and require specialized knowledge such as x86 assembly and familiarity with the specific file and operating system. Fortunately, once this research has been accomplished part of the results can be used to detect future malware with minimum effort. Some of the alternatives to instrument these results are:
- Identify malware using Hash signature. The simplest approach to malware detection is hashing the contents of the file and comparing that hash against a blacklist. This approach is widely used in commercial Antivirus. The disadvantage of using this approach on its own is that it ineffectively detects malware that has incurred any byte level alterations. However, the blacklisting of specific and unaltered malware instances is a useful technique that is easily and efficiently implemented.
- Identifying Malware Variants Using Fuzzy Hashing. Most malwares often include "mutation" capabilities to avoid anti-virus detection. These are common known as Polymorphic malware. The process of morphing creates variants of the malware and may render the hashing technique to identify the malware ineffective. Fuzzy hashing can be used to help malware analysts to determine whether two suspected malwares are similar. For fuzzy hashing, hashing is performed in blocks instead of the whole file and comparison between the hash of each block can allow us to draw conclusion whether these two files are similar or not. A high similarity may indicate that the files in question may be variants of each other. Ssdeep is one of the widely used open source tool by malware analysts to perform fuzzy hashing.

In any case, malware developers often include some preventive measure to prevent their malware from being analysis. An important problem for the static analysis is the generation of malware variants made easy by automatic packers and polymorphic engines, which produce by encryption and compression a multitude of distinct versions. One common method is the usage of packer. Packers often perform compression, encryption or code obfuscation on the target binary. These techniques reveal that using hash-based detection or fuzzy hashing is not useful. However, malware analysts could can to manually unpack the malware and after to try doing any effective analysis. Some tools useful for this task are IDA Pro and OllyDbg for displaying the code of malware as Intel ×86 assembly instructions, which provide a lot of insight into what the malware is doing and provide patterns to identify the attackers, memory dumper tools like LordPE and OllyDump to obtain protected code located in the system's memory and dump it to a file, etc.

If there is multiple layer of packing, they will have to manually unpack each layer before analysis can be conducted. This process is made more complex if the malware author utilizes custom packer or uses anti-debugging techniques. Indeed, this is a time-consuming process.

In the following sections dynamic analysis is presented as a good alternative to solve this problem. Exist, however, different researchers who had tried to propose advanced static analysis to quickly determine when a malware program is similar to a previously-seen sample, operates directly on packed code [5]. It was released a lot tools and researches to work with packed binaries: Justin, Renovo, PolyUnPack, OmniUnpack, etc. Malware might be polymorphic, but static program features are known to be invariant under different polymorphic techniques. Byte and instruction level program features perform poorly when faced with the polymorphic variations and mutations. To avoid the problems of syntactic polymorphism, higher level abstractions of the program can be used: control flow (control flow graphs and call graphs), API calls or data flow.
- Control Flow Graphs. Control flow graph analysis is an analysis, which is based upon the construction and traversal of nodes, basic blocks, with regard to the content of the nodes as well as their inter relationship. When performing control flow graph (CFG) analysis one typically analyzes a program binary pre-execution in order to detect malicious behavior. There exist several methods of how to do this, but the most common way is to use a disassembler on the binary. Thus creating a CFG of the function, and system calls. Properties of this CFG are then compared to signatures, which exhibit malicious behavior in order to check whether there is a match. Furthermore it is static, as it most often parse the binary pre-execution. Of course there exist methods, which use control-flow graphs for detection which are dynamic and hybrid.
- Call Graph. Call graphs, like control flow graphs, model the possible execution paths and control flow in a program. The call graph is a directed graph representing the inter-procedural control flow. Like the control flow graph, alternative or abstracted representations are possible such as dominator trees.
- API Calls. Programs interface with the underlying operating system and libraries. The invocation of an API function from a known a library can often be identified statically. The API call sequence gives insight to the behavior of the program. The use of API calls is another approach to solve the syntactic polymorphism problem. This approach has problems with malware that obscures the use of those calls, as is the case of the stolen bytes technique [2] introduced by code packing tools.
- Data Flow. The data flow of a program represents the set of possible values data may hold during program execution. Many types of data flow analyses exist, including live variable analysis, reaching definitions, and value-set analysis. Each analysis looks at a particular property of the data at specific program points. Modelling the data flow requires that the control flow be successfully identified.

### Dynamic analysis:

As analysis tools and techniques become more elaborate, attackers come up with evasion techniques to prevent their malware from being analyzed. Such techniques cover self-modifying or dynamically generated code, as well as approaches that detect the presence of an instrumented analysis environment, thus, allowing the malware to conceal or inhibit its malicious behavior. Analyzing the actions performed by a program while it is being executed is called dynamic analysis. From these actions it is possible define the malware signatures that will feed the static analysis. There are different approaches and techniques that can be applied to perform such dynamic analysis, mainly: Function Call Monitoring, Function Parameter Analysis and Information Flow Tracking. There are several tools to simplify this analysis, for example: Process Monitor and Capture BAT (for file system and registry monitoring), Process Explorer and Process Hacker (for process monitoring), Wireshark (for network monitoring) or Regshot (for system change detection).
- Function call monitoring. The property that makes functions interesting for program analysis is that they are commonly used to abstract from implementation details to a semantically richer representation. One possibility to monitor what functions are called by a program is to intercept these calls (system calls), for example, file system operations or process/thread creation. The process of intercepting function calls is called hooking. The analyzed program is manipulated in a way that in addition to the intended function, a so-called hook function is invoked. This hook function is responsible for implementing the required analysis functionality, such as recording its invocation to a log file (post-processing function call traces), or analyze input parameters.
- Function Parameter Analysis. While function parameter analysis in static analysis tries to infer the set of possible parameter values or their types in a static manner, dynamic function parameter analysis focuses on the actual values that are passed when a function is invoked. The tracking of parameters and function return values enables the correlation of individual function calls that operate on the same object. For example, if the return value (a file-handle) of a CreateFile system call is used in a subsequent WriteFile call, such a correlation is obviously given. Grouping function calls into logically coherent sets provides detailed insight into the program's behavior from a different, object centric, point of view.
- Information Flow Tracking. An orthogonal approach to the monitoring of function calls during the execution of a program, is the analysis on how the program processes data. The goal of information flow tracking is to shed light on the propagation of "interesting" data throughout the system while a program manipulating this data is executed. In general, the data that should be monitored is specifically marked (tainted) with a corresponding label. Whenever the data is processed by the application, its taint label is propagated. Assignment statements, for example, usually propagate the taint-label of the source operand to the target. Besides the obvious cases, policies have to be implemented that describe how tainted-labels are propagated in more difficult scenarios. Such scenarios include the usage of a tainted pointer as the base address when indexing to an array or conditional expressions that are evaluated on tainted values.

Dynamic analysis usually applies different implementation strategies to analyze malware. It is important to remember that analysis components executing on the same privilege level as the malware need to apply stealth techniques to remain hidden from the analyzed program (analysis in user-space vs kernel space). Implementing the analysis functionality in an emulator or virtual machine potentially allows an analysis approach to hide its presence even from malware that executes in kernel space. Of course, malware executing in a higher privilege level than the analysis component can always hide itself and thus thwart being analyzed.

In general, techniques used in dynamic analysis range from debugging to utilizing anomaly detection systems. It is common to virtualize or to emulate part or full of the execution environment (sandboxing, memory virtualization, network virtualization, etc.) for detecting malicious code. There are different malware analysis tools and framework to help in this topic: Anubis, Cwsandbox, Norman Sandbox, Joebox, Wildcat, etc.

Dynamic analysis using anomaly detection benefits from research into intrusion detection systems, which often also depend on anomaly detection (anomaly Detection on Host, Botnet Detection on Network Based Systems, etc.). It is usual a first phase monitoring where the program under inspection it is executed, after checking for inconsistencies with what was learned during the training phase. Several proposals are well-known: to calculate the expected payload for each service on a system (PAYL), to create rules with frequent episodes and system calls, to monitor short sequences of system calls, to detect anomalous traffic events (NATE) or to signature instruction blocks (goodware) and to verify at runtime.

As seen in previous sections, the static analysis of malware is very useful for the rapid detection of malware. However, this analysis is not able to detect new malware and it not always has success in adaptation to changes in previously detected malware. Static analysis survives, in both manual analysis and automated systems, due to the safety factor it adds by never running the malware. It also is very capable at generating signatures that can be distributed to detect the malware in the future. However, as it cannot see the results of running code, it is unable in dealing with the non-deterministic nature of disassembling code, large code bases, obfuscation techniques, and ends up being most capable at identifying related pieces of malware rather than identifying wholly new malware.

By other hand, dynamic analysis allows more accuracy in malware detection, even when malware developer uses special techniques to bypass any protection. However, these dynamic techniques have a huge cost of performance and resources. Today do not exist any solution to move this kind the solutions to the user's mobile device. For that reason, they are used as a first stage for static detection techniques.

A new approach therefore is needed. To confront the malware wave that is coming is required a new solution able of performing light and ongoing analysis without losing this character of predictability proposed from dynamic solutions.

### References:

[1] Bilar, D. Opcodes as predictor for malware. Int. J. Electronic Security and Digital Forensics, Vol. 1, No.2. 2007
[2] Boehne, L. Pandora's Bochs: Automatic Unpacking of Malware, University of Mannheim, 2008.
[3] Choi, S; Cha, S; Tappert, C. A Survey of Binary Similarity and Distance Measures. Journal of Systemics, Cybernetics & Informatics, 2010, vol. 8, no 1.
[4] GANDOTRA, E; BANSAL, Divya; SOFAT, Sanjeev. Malware Analysis and Classification: A Survey. Journal of Information Security, 2014, vol. 2014.
[5] Grégoire, J; Milani, P; Neugschwandtner, M; Kruegel, C; Vigna, G. A Static, Packer-Agnostic Filter to Detect Similar Malware Samples. DIMVA 2012: 102-122.

### Summary of the Invention

To overcome the above described problems in malware detection a correlation system of smartphone applications is proposed. The main idea behind present invention is to be able to determine if an application belongs to the same type of developer. When the developer presents her/his credentials (digital certificate), creates the application package and publishes it in the market, some information that facilitates their identification is released. So the system is able to establish relationships between different applications that have been signed, packed and distributed with a similar modus operandi.

This system is built from an anomaly-based model. Thus, for example, given an application, the likelihood of being an application hiding malware is determined without having made a previous offline analysis of the same and without significant computational costs. All the processes needed to correlate this dispersed information are performed with the following characteristics: independency of any kind of code analysis (static or dynamic), high performance and instant response.

To that end, according to a first aspect there is provided a computer implemented method for classifying mobile applications, the method comprising, as commonly in the field, establishing a similarity degree between a mobile application to be classified and one or more classified mobile applications before said mobile application been installed, or broadcasted, in a mobile computing device of a user. The one or more classified mobile applications are already analyzed and stored in a storage unit of a server.

In a characteristic manner and on contrary to known proposals, the method comprises:
a) analyzing, an analyzer unit, the mobile application to be classified for obtaining features thereof, said analysis being performed at least by evaluating: information related to the use made of the digital certificate with which the mobile application has been signed and/or information of the software package containing the mobile application and/or information related to the publication of the mobile application;
b) comparing the obtained features of the mobile application with features of the one or more classified mobile applications; and
c) as a result of said comparison, classifying the mobile application depending on how much similar the mobile application is with the one or more classified mobile applications, said classification comprising obtaining a risk assessment of the mobile application.

In the method, step a) includes the calculation of a set of estimators from the obtained features of the mobile application and the gathering of the set of calculated estimators in one or more clusters to define an application profile associated to the mobile application. In addition, step b) includes the comparison of at least one of said clusters with at least one cluster of one of said one or more classified mobile applications.

In accordance with an embodiment, the mobile application is stored in the storage module previous to performing said step a).

The analyzing and storing in the storage unit of the one or more classified mobile applications is performed by an inspector unit of the server after the inspector unit having localized the one or more mobile applications in an application market.

In accordance with an embodiment, the inspector unit continuously updates the features of the one or more classified mobile applications stored in the storage unit by downloading information regarding each mobile application from the application market.

In the method, said risk assessment of the mobile application is preferably performed by an external unit that specifies the type or types of risk of the first mobile application, the type or types of risk including at least malware, adware, or a Potentially Unwanted Application, PUA. In accordance with an embodiment, the type or types of risk are specified by including a tag to the mobile application.

The information related to the use made of the digital certificate with which the mobile application has been signed may include: version of the application, serial number, indication from when the application is valid, indication from until the application is valid, public Key used for the signing, information of the public Key, a subject Key identifier, an authority Key identifier, basic constraints, policies of the digital certificate, an algorithm used for the signature, key usage, autoSigned, a certificate of localizations, an identifier for the certificate of localizations, country name, state, locality, an unstructured Address, a common Name, a surname, the device serial number, an unstructured name, a title and/or an email.

Moreover, the information of the software package containing the mobile application may include: the Software Development Kit, SDK, used, the modification date of the included files, the creation date of the included files and/or privileges.

Also, the information related to the publication of the mobile application may include: price, age of the application, date of the developer profile activation, name of the application, description, total Rating, comments, name of the user who give comments, comment rating, current version, email of the developer, official site and/or declared size.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Therefore, according to a second aspect there is provided a computer program encoded on a non-transitory storage medium, the product comprising non-transitory computer readable instructions for causing one or more processors to perform operations to classify mobile applications, comprising establishing a similarity degree between a mobile application to be classified and one or more classified mobile applications before said mobile application been installed, or broadcasted, in a mobile terminal of a user, by:
analyzing the mobile application to be classified for obtaining features thereof, said analysis being performed at least by evaluating: information related to the use made of the digital certificate with which the mobile application has been signed and/or information of the software package containing the mobile application and/or information related to the publication of the mobile application;
comparing the obtained features of the mobile application with features of the one or more classified mobile applications; and
classifying the mobile application in view of said comparison, said classification comprising obtaining a risk assessment of the mobile application.

In accordance with an embodiment, the analyzing comprises the calculation of a set of estimators from the obtained features of the mobile application and the gathering of the set of calculated estimators in one or more clusters to define an application profile associated to the mobile application; and the comparing comprises the comparison of at least one of said clusters with at least one cluster of one of said one or more classified mobile applications.

The preferred features may be combined as appropriate, as would be apparent to a skilled person, and may be combined with any of the aspects of the invention.

All the solutions being proposed today move between the usage of blacklists, the definition of signatures to determine the profiles of developers or the analysis of tactics, techniques and procedures (TTP) to learn the modus operandi of the generators of this type of suspicious software. While blacklists has been shown as useless, there are promising developments in profiling based on aspects such as: actions/intent, installation/Deployment features, exploits, shellcode, DNS, command and control protocol, encryption, etc. Present invention complements these measures with innovative aspects of TTP that could define the attacks and the attackers themselves. Specifically, the invention proposes an analysis strategy based on three levels that take into account some features that are not being included in the current solutions. The invention provides an initial and fast evaluation that keeps apart from the application code and that is independent of any sandboxing technique. Hence it can be seen as a first step that can be followed by any other more traditional analysis. These three levels are:
- Use made of digital certificates for signing this suspicious software and the cryptographic data stored within the application. Actually, a certificate should say everything about its creator, since it is the proof that a public key belongs to him. But in an environment in which the certificates are necessary but not respected, and, even in some scenarios, the attackers create one-time-certificates whenever they are needed, as it has been seen in Google Play^{®}, it is possible ask if one may identify who a person is even if this person uses disposables certificates.
   In this case it is not possible identify the attacker but still it is achievable describe the path defined with all the suspicious applications the attacker has published, even if those are very different or distant in time. Some of the aspects of the certificate, on which our solution is based, allow making a fingerprinting of the authors of suspicious software.
- Way in which the applications are packetized. It is true other studies and products consider features of the strategy used to package these applications. However, present invention proposes the implementation of a package footprinting based on discriminatory features of the generated package itself. Building these packages defines a set of generic flags both equally characteristic of the modus operandi of the attacker, as the technical characteristics of the software used. You might get to obtain under what platform or environment a fraudulent application has been developed.
   These flags settings have been contrasted and other metadata defined in the applications. They have been extracted from attackers' packages and from legitimate developers' packages. It has been founded that it is possible to obtain discriminant information to provide a reliable classification. • Searching for new features to make more accurate the profile obtained so far in previous levels. These features characterize the way the suspicious applications are delivered to users. For example, you can determine the date of publication, a selection of keywords that may pose a recognizable signature from the work of a developer, even if he has falsified his credentials, the relationship with other apps developer, relationship between publication dates and versions, etc.

### Brief Description of the Drawings

The previous and other advantages and features will be more fully understood from the following detailed description of embodiments, with reference to the attached, which must be considered in an illustrative and non-limiting manner, in which:
Fig. 1 shows the general architecture of the invention.
Fig. 2 illustrates the concept definition of application profile using estimators to specify the relations discovered with applications features
Fig. 3 are some examples of weighted relationships between several applications calculated through the profile vectors similarity computation.
Fig. 4 are some examples of weighted relationships between several applications calculated through the profile vectors similarity computation with information retrieved from external system of application assessment.
Fig. 5 shows examples weighted relationships between several applications calculated through the profile vectors similarity computation with information retrieved from external system of application assessment and characterizing the related apps with the results of previous analysis.

### Detailed Description of Several Embodiments

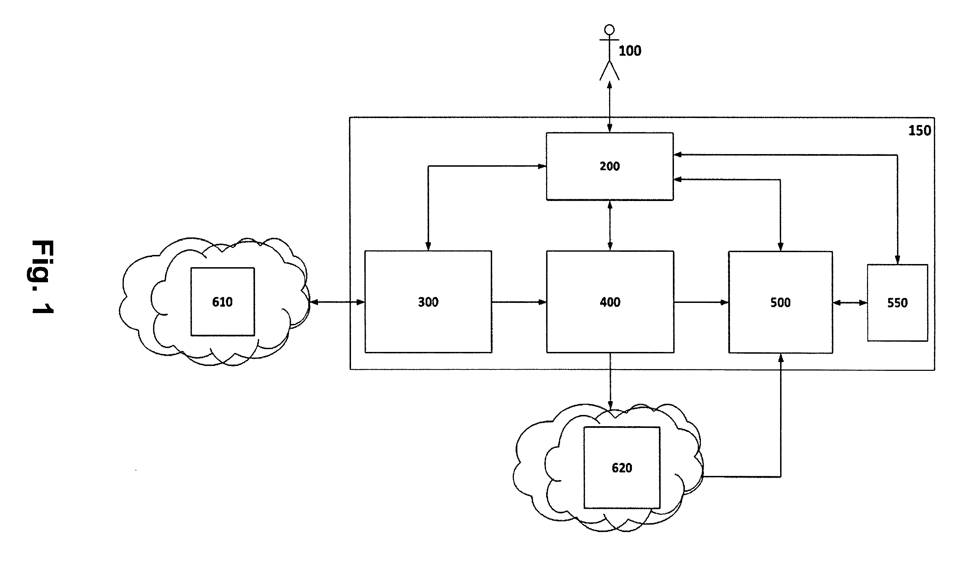

Figure 1 illustrates the general architecture of the proposed invention according to some embodiments. In this figure, it is possible to identify the following elements: a user (or users) 100, a server 150, an application-market 610 and an external unit (or external application assessment system) 620. In turn, the server 150 is defined with several modules/units: an application inspector unit 300, an application storage unit 400, applications analyzer unit 500, a module in charge of exploring new features correlations 550 and a module capable of coordinating all other modules and ensure the logic of the system 200.

Inspector unit 300 is organized as a queue manager that receives tasks from Orchestrator System 200 module and schedules when and how these tasks must be executed. It can create, eliminate and manage multiple processing units that can act as different roles (crawlers, downloaders). In extension, when one of these process units is configured as crawlers, it is possible to apply different policies depending on the needs of discovery. When units act as downloaders, they are responsible for retrieving all necessary information for properly profiling an application/s. So, inspector unit 300 is responsible for:
- Discovering new applications.
- Downloading all the information related with an application.
- Generating the tasks to be processed by the rest of the system.
- Updating information of already processed applications.

The application storage unit 400 stores the information related to an application that has to be analyzed. It does so in two stages: first it ensures that the analyzer unit 500 is able to access the information retrieved by inspector unit 300. The second phase incorporates the necessary logic to retrieve information from external mechanisms for evaluating applications and incorporate them into the application profiles. Its tasks are:
- Store tasks (application information) generated by 300 until it is processed by the analyzer application.
- Store application information to be used as sources by external evaluation systems.

The analyzer unit 500 allows the extraction of features that allow profiling the applications based on the modus operandi of the developers. The basis of this characterization is that some application developers do not want to be discovered and then they act in a peculiar way (modus operandi) that can be used to identify them. The main tasks of this module are:
- Extract features from the information stored in storage unit 400, and so that analysis is possible (e.g. database, etc.)
- Store metadata resulting from the use of external system of application evaluation in a structured way.
- In training mode this module in communion with module 550:
   o Allow searching for correlations between the recovered items.
   o Facilitate the definition of new estimators for the development of effective profiles.
- In operating mode this module:
   ∘ Be able to keep updated the profiles for all applications processed by the system.
   ∘ Apply the policies associated with user-defined alerts.
   ∘ Draw the profile of a given application
   ∘ Allow to estimate the degree of similarity of a given profile through comparing it with all the previously analyzed profiles.
   ∘ Determine the weight of each relationship and add the information relative to external mechanisms for evaluating applications 620.

System Orchestrator 200 is designed to: Manage the information exchange between every module of the system, provide the needed interfaces that allow the user 100 to access in different modes, manage user accounts and monitorize the system activity and manage the alerts defined by the user 100 when an application satisfies the criteria used in its definition.

When a user 100 accesses the service, it can do it by using a dedicated program installed on a computing device 102 or alternatively from a web browser 101. If the user 100 does the access by using the dedicated program on a computing device 102 the user 100 can request the analysis of a single application A. On contrary, when the access is performed through a web browser 101, the user 100 will be able to request analysis over several applications in a batch mode or interact with the system by specific queries to retrieve information stored in it. In any case, the user 100 accesses to the server 150 to determine the degree of relationship that associates an application A with any other applications B, prior to installation or broadcast. Along with these relationships, the information for each application returned by an external unit 620 for applications assessment is added. Typically, this information is specific to each application, and therefore can be added as metadata to the application profile. If this external unit 620 concludes that an application is malware, adware, or PUA (potentially unwanted application) the system would insert this result to the application profile.

During the operation of the system, it is convenient to rely on a large storage of applications B for two reasons: the more applications are processed, the more accurate will be the relationship set returned by the analyzer unit 500. And, of course, the more applications are indexed, the more numerous the results will be. To ensure a steady flow of applications and to ensure the updating of information stored of them, it has been proposed a module called inspector unit 300. This module locates applications on application markets 610, downloads all the information that facilitates the extraction of features and checks the status of applications B already downloaded and analyzed to capture any changes that should be collected by the system. All the information retrieved by inspector unit 300, that will be used later to analyze these applications B, gets stored in the storage unit 400 waiting to proceed with the analysis. From this storage 400, the analyzer unit 500 retrieves information to extract all the features needed to create an accurate profile for any application and to establish the relationships between applications. Also a procedure for labeling applications according to external evaluation mechanisms 620 may start. The results of these evaluations are incorporated with the profile, calculated from the extracted features, and are stored at the analyzer unit 500 altogether.

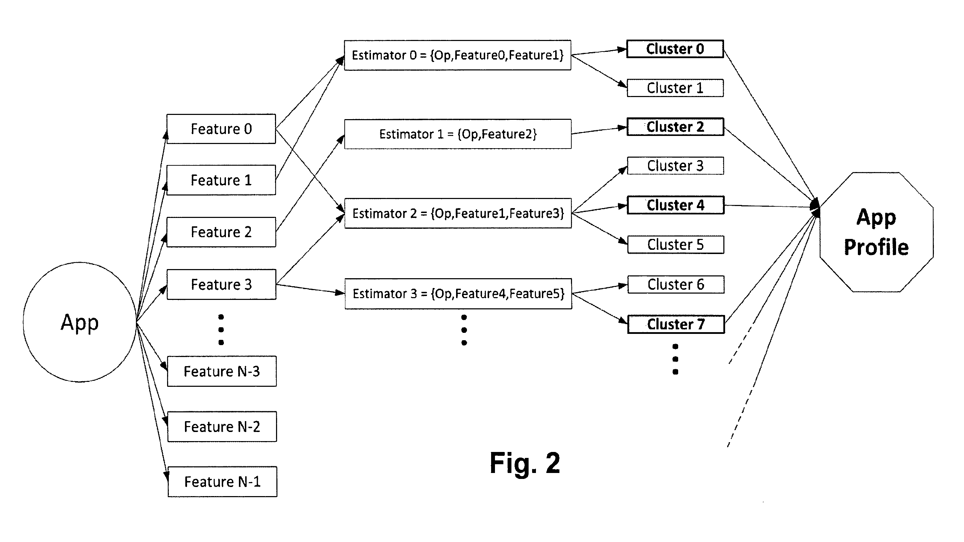

To establish these relationships, the system enables to cluster applications that satisfy common results when some operation is performed over subsets of features. In this invention, the set of these common features and operations - arithmetic-logical operations- that are applied to them, is called estimator. Depending of the results produced by the estimator, it is possible to discriminate some applications from others. For example, let suppose that an estimator is defined with the field *Common Name (CN)* of the digital certificate employed to sign the application as the only estimator feature. The estimator operation is a comparison with the string "*aba*". The possible returning values of the estimators are *True* if an application has the substring aba in the CN field of its digital certificate, and *False* if it does not. So, using this estimator, two mutual-exclusive clusters can be defined to categorize applications (Figure 2).

Preferably, the invention defines the application profiles as vectors whose components are the estimators built over the features extracted from the application information stored in the storage unit 400. The configuration of these profiles can be performed dynamically, in order to fulfill the user's requirements. Once a vector configuration is set, it is possible to determine the relationships between all the vectors of the system with a given vector, and find out which of these profiles, in fact which applications B, are closer to the corresponding application A.

Therefore, the definition of the estimators and, by extension, the definition of the profiles used in the system for each application A, B is dynamic. A user 100 can select what estimators to use or can interact with the estimators by entering the information manually. In fact, the system allows keeping several estimator configurations reconfiguring the criteria employed to determine which applications B are related to a specific application A.

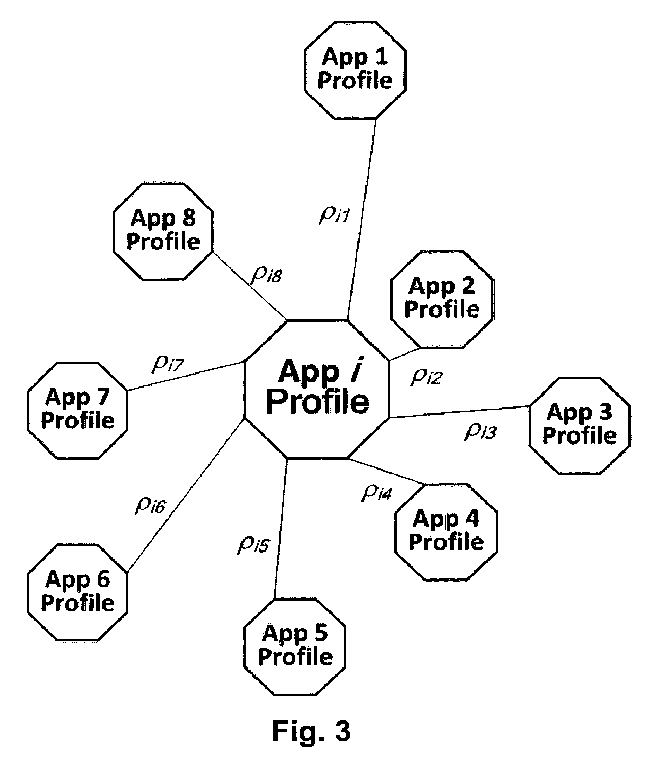

Taking advantage of the flexibility of this architecture and contrary to existent solutions, the set of estimators proposed facilitate the relationship between applications A, B in terms of factors that identify developers of applications rather than applications themselves. A degree of similarity (Figure 3) between applications A, B is established by referring to the way the developers/distributors have identified themselves (digital certificates issued to digitally sign software), how they have bundled the application files into a package before distribution (software packages) and how they have publicized the application through the different markets (market webpages).

The features extracted from the applications used to build estimator are those contained in the following table 1.

**Table 1: Common features for the applications of several markets**

| | |
|---|---|
| Market Page Features | *Price* |
| | *Age of the application* |
| | *Date of the developer profile activation* |
| | *Name of the application* |
| | *Description* |
| | *Total Rating* |
| | *Comments* |
| | *Name of the user who give comments* |
| | *Comment rating* |
| | *Current version* |
| | *Email of the developer* |
| | *Official Site* |
| | *Declared Size* |
| Software Package Features | *SDKs used* |
| | *Modification date of the included files* |
| | *Creation date of the included files* |
| | *Privileges.* |
| Digital Certificates Features | *Version* |
| | *serialNumber* |
| | *validFrom* |
| | *validTo* |
| | *publickey* |
| | *publicKeyInfo* |
| | *subjectKeyIdentifier* |
| | *authorityKeyIdentifier* |
| | *basicConstraints* |
| | *Policies* |
| | *signatureAlgorithm* |
| | *keyUsage* |
| | *autosigned* |
| | *certificateLocalizations* |
| | *idCertificateLocalizations* |
| | *countryName* |
| | *state* |
| | *locality* |
| | *unstructuredAddress* |
| | *commonName* |
| | *surName* |
| | *deviceSerialNumber* |
| | *unstructuredName* |
| | *Title* |
| | *Email* |
| | *Organization name* |
| | *unitName* |

The features listed in table 1 are compatible with almost every applications market 610. In a deeper analysis, working over a specific market, it is possible to add some others feature that are typical for these markets.

Apart from the features displayed in Table 1, the system stores any feature that can be extracted from the information retrieved by the inspector unit 300. As stated before, the user 100 can interact with the system to build their own estimators. However, according to an embodiment, the system provides an independent module in charge of exploring new features correlations that may lead to the definition of new estimators 550.

Figure 3 shows the achieved relationships between the applications A, B. These are weighted with a value *ρᵢⱼ,* where i is the target application A and *j* determines any application B previously analyzed by the system. The system is designed to make it possible to switch between different methods for assessing the similarity between two profiles represented as vectors [3].

For example, if Google Android^{®} system is chosen as the testing platform, the subset of estimators can be defined based on the features that can be retrieved in response to the digital certificates used in the application A, the APK file of the application A (i.e. software package) and the page from which this application A is distributed in Google Play^{®} (i.e. market page) (Table 2):

**Table 2: Subset of features for the example**

| **Features** | **Description** |
|---|---|
| Feature 0 | Digital certificate field *Valid from* |
| Feature 1 | Digital certificate field *Valid to* |
| Feature 2 | Digital certificate time zone |
| Feature 3 | Time-zone associated with the software package |
| Feature 4 | Image hashes of the images included in market page |
| Feature 5 | Software Package (APK) creation date. |
| Feature 6 | App Register date in Google Play |

The subset of estimators is displayed in Table 3. It can be seen that the estimator definition implies the selection of the operation that applies over the features included in its definition.

**Table 3: Subset of proposed estimators defined from the features introduced in Table2**

| **Estimator** | **Definition** | **Description** |
|---|---|---|
| Estimator 0 | est_0=(Diff,Feature1,Feature0) | Lifetime of the digital certificate |
| Estimator 1 | est_1=(compare,Feature3,Feature2) | Difference between the time-zone of the digital certificate and the time-zone of the software package. |
| Estimator 2 | est_2=(Select count(*),Feature4) | Images present in other applications |
| Estimator 3 | est_1=(Diff,Feature6,Feature5) | Time interval between the creation of the APK and the registration of this application in the market. |

From this subset of estimators, it is possible define the next clusters (Table 4):

**Table 4: Proposal of values for any estimator included as component in the profile vector.**

| **Estimator** | **Threshold** | **Value** |
|---|---|---|
| est_0 | If 1 year < est_0< 3 years | Cluster 0 |
| | Else | Cluster 1 |
| est_1 | If same GMT | Cluster 2 |
| | Else | Cluster 3 |
| est_2 | Image previously used | Cluster 4 |
| | Image not previously used | Cluster 5 |
| est_3 | If 1 min < est_3 < 5 minutes | Cluster 6 |
| | Else | Cluster 7 |

From this proposal, the profile of an application A could be determined as a vector whose components are the values that the application A takes for the each estimator. Related with this vector the results that have been returned as external evaluation systems can be attached.

With the vectors of all applications, calculated from this definition of estimators, it is possible to determine the degree of similarity of some applications over others. Once these relationships are weighted, the degree of similarity may be affected by the metadata that summarizes the results of the evaluation externalize or at least be enriched by the information you provide such analysis.

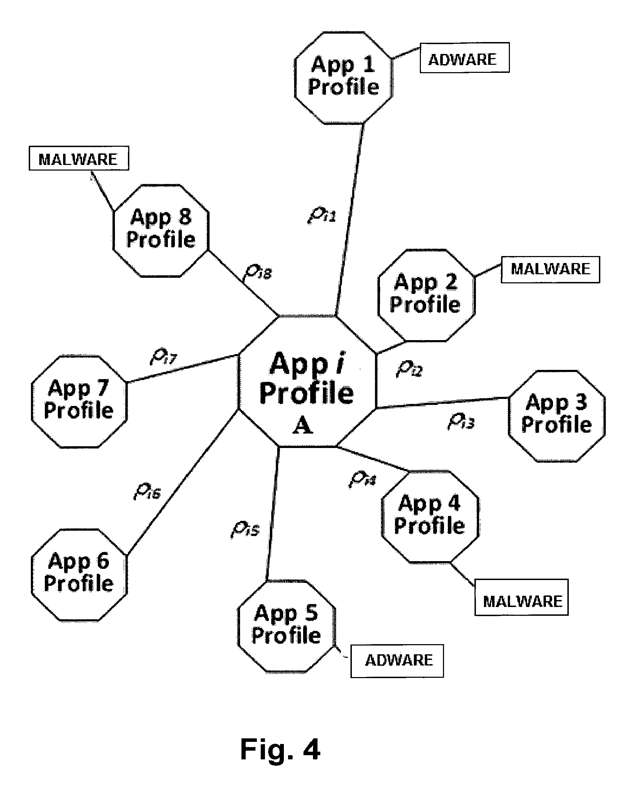

Let suppose an application i that the system connects with eight other applications. If an external evaluation source for malware detection is used, some of the application stored in the system may be tagged as malware. The analysis of the target application will determine the degree of relationship with these fraudulent applications (Figure 4). Considering that the relationships are established from the features that model the *modus operandi* of the application developers, this mesh of relation could offer an early malware diagnostic without installing the application and without invest in expensive procedures in time and resources.

This tag system not only supposes a direct method to characterize an application. It also impacts in the metadata associated with an application for future analysis, giving information of the context associated with every application related with the target application.

When a new external system for the assessment of application is added to the system, a new set of tags is incorporated. This external system must be able to analyze the applications from a market and classify them into several categories. These categories can be translated, during the adoption process, into tags associated to a particular application. For example, one external system can determine if a given application is malware or aggressive adware. Other external system can warn if one application has been retired from the market. In fact, the user can label applications in order to perform specific analysis or set alerts associated to a type de applications.

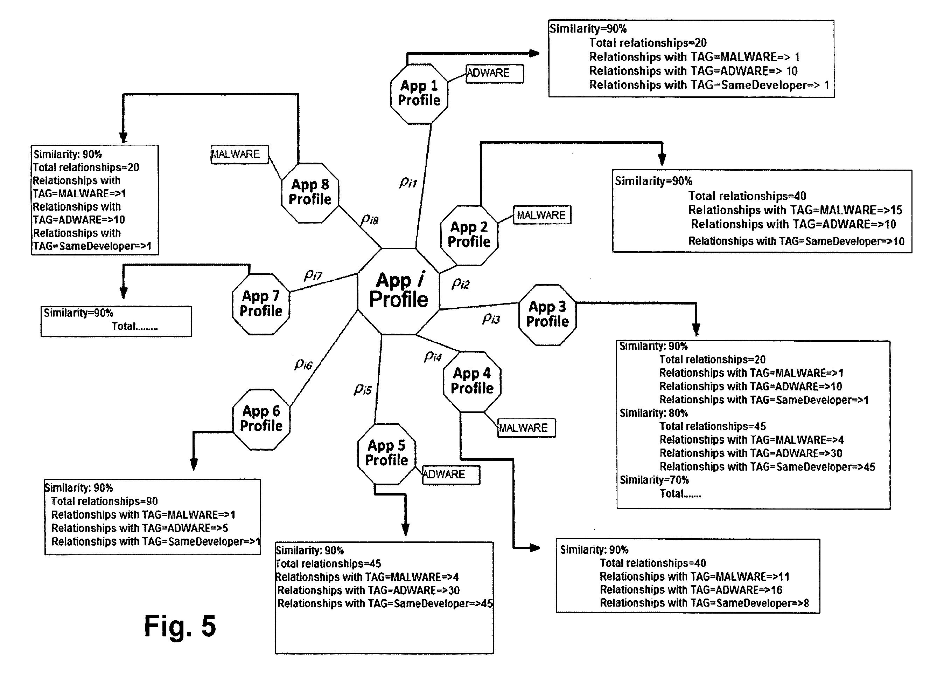

Once a new request is processed by the system, and the profile of the target application of the request is compared with other profiles stored in the system, the metadata associated with all these application is updated. This update allows maintaining, for every level of similarity, how many applications of every tag defined in the system are related with a given application. In Figure 5, it is displayed how the diagnostic of an application may be improved, extending the information of the related applications.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A computer implemented method for classifying mobile applications, the method comprising establishing a similarity degree between a mobile application (A) to be classified and one or more classified mobile applications (B) before said mobile application (A) been installed, or broadcasted, in a mobile computing device of a user (100), wherein the one or more classified mobile applications (B) being already analyzed and stored in a storage unit (400) of a server (150),
**characterized in that** the method comprises:
a) analyzing, an analyzer unit (500), the mobile application (A) to be classified for obtaining features thereof, said analysis being performed at least by evaluating: information related to the use made of the digital certificate with which the mobile application (A) has been signed and/or information of the software package containing the mobile application (A) and/or information related to the publication of the mobile application (A);
b) comparing the obtained features of the mobile application (A) with features of the one or more classified mobile applications (B); and
c) as a result of said comparison, classifying the mobile application (A) depending on how much similar the mobile application (A) is with the one or more classified mobile applications (B), said classification comprising obtaining a risk assessment of the mobile application (A).

2. The computer implemented method of claim 1, wherein:
said step a) includes the calculation of a set of estimators from the obtained features of the mobile application (A) and the gathering of the set of calculated estimators in one or more clusters to define an application profile associated to the mobile application (A); and
said step b) includes the comparison of at least one of said clusters with at least one cluster of one of said one or more classified mobile applications (B).

3. The computer implemented method of previous claims, wherein the mobile application (A) is stored in the storage module (400) previous to performing said step a).

4. The computer implemented method of claim 1, wherein the analyzing and storing in the storage unit (400) of the one or more classified mobile applications (B) is performed by an inspector unit (300) of the server (150) after the inspector unit (300) having localized the one or more mobile applications (B) in an application market (610).

5. The computer implemented method of claim 4, wherein the inspector unit (300) continuously updates the features of the one or more classified mobile applications (B) stored in the storage unit (400) by downloading information regarding each mobile application from the application market (610).

6. The computer implemented method of any of previous claims, wherein said risk assessment of the mobile application (A) being performed by an external unit (620) that specifies the type or types of risk of the first mobile application (A), said type or types of risk including at least malware, adware, or a Potentially Unwanted Application, PUA.

7. The computer implemented method of claim 6, wherein the type or types of risk being specified by including a tag to the mobile application (A).

8. The computer implemented method of claim 1, wherein the information related to the use made of the digital certificate with which the mobile application (A) has been signed at least comprises: version of the application, serial number, indication from when the application is valid, indication from until the application is valid, public Key used for the signing, information of the public Key, a subject Key identifier, an authority Key identifier, basic constraints, policies of the digital certificate, an algorithm used for the signature, key usage, autoSigned, a certificate of localizations, an identifier for the certificate of localizations, country name, state, locality, an unstructured Address, a common Name, a surname, the device serial number, an unstructured name, a title and/or an email.

9. The computer implemented method of claim 1, wherein the information of the software package containing the mobile application (A) at least comprises: the Software Development Kit, SDK, used, the modification date of the included files, the creation date of the included files and/or privileges.

10. The computer implemented method of claim 1, wherein the information related to the publication of the mobile application (A) at least comprises: price, age of the application, date of the developer profile activation, name of the application, description, total Rating, comments, name of the user who give comments, comment rating, current version, email of the developer, official site and/or declared size.

11. A computer program encoded on a non-transitory storage medium, the product comprising non-transitory computer readable instructions for causing one or more processors to perform operations to classify mobile applications, comprising establishing a similarity degree between a mobile application (A) to be classified and one or more classified mobile applications (B) before said mobile application (A) been installed, or broadcasted, in a mobile terminal of a user (100), by:
analyzing the mobile application (A) to be classified for obtaining features thereof, said analysis being performed at least by evaluating: information related to the use made of the digital certificate with which the mobile application (A) has been signed and/or information of the software package containing the mobile application (A) and/or information related to the publication of the mobile application (A);
comparing the obtained features of the mobile application (A) with features of the one or more classified mobile applications (B); and
classifying the mobile application (A) in view of said comparison, said classification comprising obtaining a risk assessment of the mobile application (A).

12. The computer program of claim 11, wherein the analyzing comprises the calculation of a set of estimators from the obtained features of the mobile application (A) and the gathering of the set of calculated estimators in one or more clusters to define an application profile associated to the mobile application (A); and the comparing comprises the comparison of at least one of said clusters with at least one cluster of one of said one or more classified mobile applications (B).
